# EUROPEAN PATENT SPECIFICATION

(11) **EP 0 538 796 B1**
(45) Date of publication and mention of the grant of the patent: **25.03.1998**
(21) Application number: 92117929.7
(22) Date of filing: 20.10.1992
(51) Int. Cl.: G02F 1/1335

(54) **Homeotropic liquid crystal display device**
Homeotropes Flüssigkristallanzeigegerät
Dispositif d'affichage à cristal liquide homéotrope

(30) Priority: 21.10.1991 JP 272852/91
(43) Date of publication of application: 28.04.1993
(73) Proprietor: Stanley Electric Co., Ltd., Meguro-ku Tokyo 153 (JP)
(72) Inventor: Clerc, Jean Frederic, F-11024 Chatillon (AO) (FR); Hirose, Shinichi, Isehara-shi, Kanagawa-ken (JP)
(74) Representative: Wagner, Karl H., Dipl.-Ing.

(56) References cited:
- EP-A- 0 162 775
- EP-A- 0 239 433
- EP-A- 0 379 315
- EP-A- 0 424 951
- US-A- 4 385 806

## Description

### BACKGROUND OF THE INVENTION

### a) Field of the Invention

The present invention relates to a liquid crystal device, and more particularly to an optical compensator for widening a field of view of a hormeotropic (vertical orientation type) liquid crystal display device having liquid crystal molecules oriented in the direction vertical to the substrates.

### b) Description of the Related Art

There is known a homeotropic liquid crystal display device which includes liquid crystal molecules oriented substantially in the direction vertical to the substrates, and crossed polarizers sandwiching the homeotropic liquid crystal cell.

During an off-state while no voltage is applied to the liquid crystal cell, light passed through one polarizer is not affected by the liquid crystal cell, reaches the other polarizer, and is intercepted by it.

Light incident to the substrate in the vertical direction poses no problem. However, as the incident angle of light departs from the vertical direction, the polarization of the incident light is affected by liquid crystal birefringence so that some incident light may transmit through the other polarizer, which should otherwise intercept the incident light. The contrast between the on- and off-states therefore lowers, and what is worse the white and black are reversed in some cases.

Therefore, in the case of a homeotropic liquid crystal display device having liquid crystal molecules oriented substantially in the direction vertical to the substrates, the field of view is considerably limited. Use of optical compensation plates has been proposed in order to enlarge the field of view.

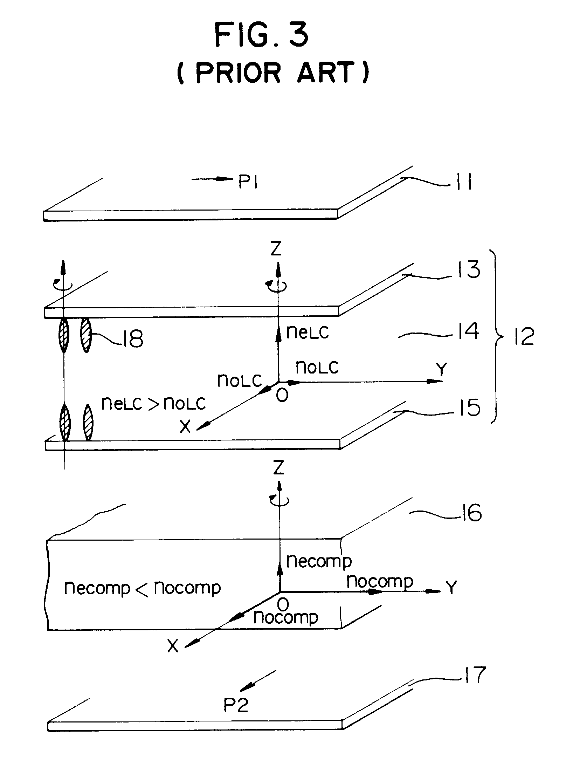

Fig.3 shows an example of optical compensation applied to a vertical orientation type liquid crystal display device, as disclosed for instance in EP-A-0 379 315.

In Fig.3, under a polarizer 11 on the incoming light side, there is disposed a liquid crystal cell 12 constructed of a substrate 13, a liquid crystal layer 14, and another substrate 15. Under this liquid crystal cell 12, there are disposed an optical compensation plate 16 and another polarizer 17 on the outgoing light side in this order. The two polarizers 11 and 17 constitute crossed linear polarizers mounted perpendicularly to each other.

Each liquid crystal molecule 18 has a large refractive index n_{eLC} along the major or principal axis, and a uniform low refractive index n_{oLC} in direction in a plane perpendicular to the major axis. The refractive index n_{eLC} is larger than the refractive index n_{oLC}, i.e., n_{eLC} > n_{oLC} (positive optical activity). The optical compensation plate 16 is made of uniaxial optical medium having an optical axis vertical to the substrates, the refractive index n_{ecomp} in the optical axis direction being smaller than the refractive index n_{ocomp} in the in-plane direction (negatice optical activity).

The liquid crystal layer 14 has a positive optical activity, whereas the optical compensation plate 16 has a negative optical activity. These positive and negative optical activities compensate each other to widen the field of view of the liquid crystal display device.

Fig.4 shows another example of an optical compensation mechanism, as disclosed for instance in US-A-4 385 806.

A liquid crystal cell 12 is formed of a liquid crystal layer 14 sandwiched by substrates 13 and 15. Optical compensation plates 22 and 26 are disposed on the outer sides of the substrates 13 and 15. On the outermost sides of the device, there are disposed crossed polarizers 21 and 27. Similar to the liquid crystal cell shown in Fig.3, the liquid crystal molecules 18 of the liquid crystal cell 12 are oriented substantially in the direction vertical to the substrates 13 and 15 during the state while no voltage is applied thereto, providing a positive optical activity.

The optical compensation plate 22 has biaxial optical anisotropy, and its refractive indices have a relationship n1 > n2 > n3. The axis having the smallest refractive index n3 (z-axis) is aligned in the direction of thickness of the optical compensation plate 22. The axes having the largest and next largest refractive indices n1 (y-axis) and n2 (x-axis) are aligned in the in-plane direction of the optical compensation plate 22.

Similar to the optical compensation plate 22, the other optical compensation plate 26 is made of biaxial optical medium having refractive indices of n1 > n2 > n3. The axis having the smallest refractive index n3 is aligned in the direction of thickness of the optical compensation plate 26. The direction of the optical axis for the second largest refractive index n2 of the optical compensation plate 26 is aligned in the y-axis direction for the largest refractive index n1 of the optical compensation plate 22. The direction of the optical axis for the largest refractive index n1 of the optical compensation plate 26 is therefore aligned in the optical axis direction for the second largest refractive index n2 of the optical compensation plate 22.

In a combination of the optical compensation plates 22 and 26, the refractive indices in the x-axis direction are n1 and n2, and the refractive indices in the y-axis direction are n2 and n1. Accordingly, the optical characteristic in the in-plane direction is generally homogeneous. The refractive index in the z-axis direction is the smallest refractive index n3. The combination of the optical compensation plates 22 and 26 thus provides a negative optical activity as a whole.

The polarizing axes P1 and P2 of the crossed polarizers 21 and 27 disposed on the outer sides of the optical compensation plates 22 and 26, are aligned in the directions inclined by 45 degrees relative to the x- and y-axes.

The thickness of each of the optical compensation plates 22 and 26 is preferably set to such value which causes the polarized components in the x- and y-axis directions to have a phase difference (retardation) of a quarter wavelength λ/4.

A combination of a linear polarizer and a λ/4 wavelength plate forms a circular polarizer. By using the optical compensation plates 22 and 26 having interchanged refractive indices in the in-plane x and y directions and a thickness of λ/4, one combination of the optical compensation plate and a linear polarizer provides dextrorotation, and the other combination provides levorotation.

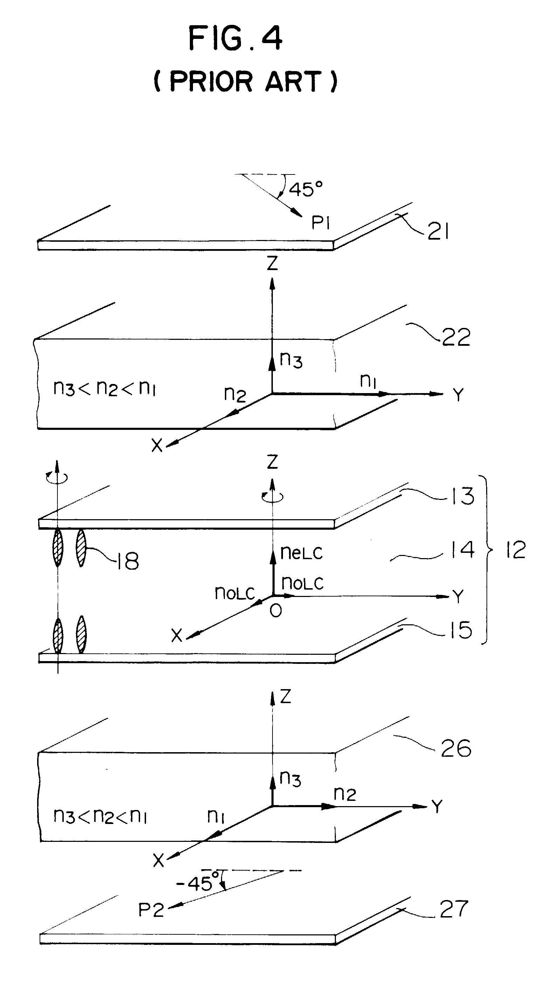

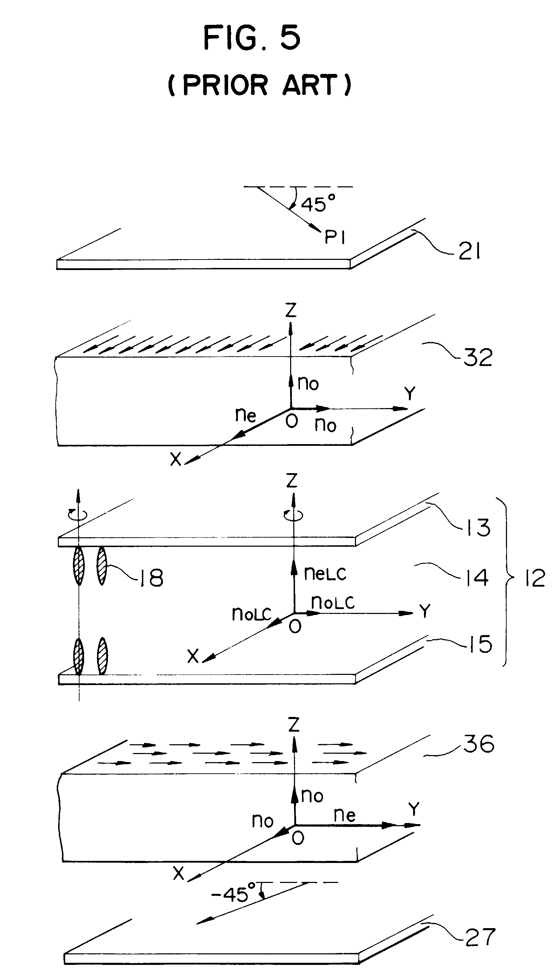

Fig.5 shows another example of an optical compensation mechanism for widening the field of view. A liquid crystal cell 12 is formed by a liquid crystal layer 14 sandwiched by substrates 13 and 15. Optical compensation plates 32 and 36 are disposed on the outer sides of the substrates 13 and 15. On the outermost sides of the device, there are disposed crossed polarizers 31 and 37. This arrangement is the same as that shown in Fig.4.

In this example, a retardation plate 32 interposed between the liquid crystal cell 12 and polarizer 21 is made of uniaxial optical material having an optical axis aligned in the in-plane (x-axis) direction.

Another retardation plate 36 interposed between the liquid crystal cell 12 and polarizer 27 is made of uniaxial optical medium having an optical axis aligned in another perpendicular in-plane (y-axis) direction. In-plane arrows of the retardation plates 32 and 36 shown in Fig.5 indicate the drawing or pulling direction of the plates during the manufacturing process.

The combination of the retardation plates 32 and 36 corresponds to optical medium providing a negative optical activity. By setting the thicknesses of the retardation plates 32 and 36 to such values providing a phase difference (retardation) of a quarter wavelength λ/4, the combination of the polarizer 21 and retardation plate 32 constitutes a dextrorotary circular polarizer, and the combination of the polarizer 27 and retardation plate 36 constitutes a levorotary circular polarizer.

The structure shown in Fig.4 necessitates a use of biaxial optical material, complicating the manufacturing process. In contrast with this, the structure shown in Fig.5 uses uniaxial optical material, simplifying the manufacturing process.

The above-described three structures are compared with each other in connection with their fields of view at a display area having a contrast 5 : 1 or more. The structure shown in Fig.3 provides the field of view about 50̸ degrees, that shown in Fig.4 provides the field of view about 30̸ degrees, and that shown in Fig.5 provides the field of view about 25 degrees. The transmission factors of vertically incident light during the on-state are about 1.5% for the structure shown in Fig.3, about 2.5% for the structure shown in Fig.4, and about 2.5% for the structure shown in Fig.5.

Namely, in the case of the structure shown in Fig.3 wherein a liquid crystal cell is compensated by a single optical compensation plate having a negative optical activity, although the field of view becomes wide, only a low transmission factor can be obtained.

In the case of the structures shown in Figs.4 and 5 wherein a liquid crystal cell is sandwiched by circular polarizers each constructed of a linear polarizer and an optical compensation plate or retardation plate, although the transmission factor can be increased by about 50̸%, the field of view is narrow.

Of the structures shown in Figs.3 to 5, the structure shown in Fig.5 provides the easiest manufacturing process. However, this structure makes the field of view narrowest.

As described above, conventional techniques are difficult to provide an optical compensation means for compensating the optical characteristics of a vertical orientation type liquid crystal display device and providing a wide field of view and a high transmission factor.

### SUMMARY OF THE INVENTION

It is an object of the present invention to provide a homeotropic liquid crystal device having an optical compensation means capable of improving the optical characteristics of the device.

It is another object of the present invention to provide an optical compensation device for a homeotropic liquid crystal display device having circular polarizers made of optical material easy to process during manufacturing, capable of improving a transmission factor without narrowing the field of view.

In accordance with the present invention a liquid crystal display device as set forth in claim 1 is provided. A preferred embodiments of the present invention is disclosed in the dependent claim.

According to one aspect of the present invention, there is provided a homeotropic liquid crystal display device including: a liquid crystal cell having nematic liquid crystal whose molecules being oriented substantially in the direction vertical to substrates under a state while no electric field is applied, the liquid crystal having a positive optical activity with an optical axis being aligned in the direction vertical to the substrates; a first retardation plate mounted on one side of the liquid crystal cell for providing a phase difference of substantially a quarter wavelength (λ/4), the first retardation plate having a positive optical activity with an optical axis being aligned in one in-plane direction parallel with the substrates; a first polarizer mounted on the outer side of the first retardation plate and having a polarizing axis in an in-plane direction parallel with the substrates, the in-plane direction being inclined by about 45 degrees relative to the optical axis of the first retardation plate; a second retardation plate mounted on the other side of the liquid crystal cell for providing a phase difference of substantially a quarter wavelength (λ/4), the first retardation plate having a negative optical activity with an optical axis being aligned in an in-plane direction parallel with the substrates, the in-plane direction being substantially parallel with the optical axis of the first retardation plate; and a second polarizer mounted on the outer side of the second retardation plate and having a polarizing axis in an in-plane direction parallel with the substrates, the in-plane direction being substantially perpendicular to the polarizing axis of the first polarizer.

According to another aspect of the present invention, there is provided an optical compensation device for a liquid crystal display device, including: a central structure having a pair of substrates and optical compensation means, the pair of substrates defining a space for containing a liquid crystal, and the optical compensation means having a negative optical anisotropy with an optical axis being aligned in a direction vertical to the substrates; and phase shift means having a pair of uniaxial optical medium plates disposed on the outer sides of the central structure, one of the pair of plates having a positive optical activity with an optical axis being aligned in one in-plane direction, and the other of the pair of plates having a negative optical activity with an optical axis being aligned in an in-plane direction parallel with the one in-plane direction.

A first circular polarizer is formed by the first retardation plate with its optical axis being aligned in one in-plane direction and the first polarizer. A second circular polarizer is formed by the second retardation plate with its optical axis being aligned in an in-plane direction parallel with the optical axis of the first retardation plate. With this arrangement, the total transmission factor of the liquid crystal panel can be improved.

The first retardation plate is made of material having a positive optical activity, and the second retardation plate is made of material having a negative optical activity.

Use of these circular polarizers and the optical compensation means ensures a wide field of view.

It is therefore possible to provide a liquid crystal display device which is simple in manufacturing, and has a wide field of view and a high transmission factor.

### BRIEF DESCRIPTION OF THE DRAWINGS

Fig.1 is a schematic diagram showing the structure of a liquid crystal display device with optical compensation according to an embodiment of the present invention.

Figs.2A to 2C are diagrams explaining the operation of the liquid crystal display device shown in Fig. 1.

Fig.3 is a schematic diagram showing an example of a conventional liquid crystal display device with optical compensation.

Fig.4 is a schematic diagram showing another example of a conventional liquid crystal display device with optical compensation.

Fig.5 is a schematic diagram showing another example of a conventional liquid crystal display device with optical compensation.

Figs.6 and 7 are graphs showing simulated results of the optical characteristics of a liquid crystal display device according to the present invention.

Figs.8 and 9 are graphs showing simulated results of the optical characteristics of a liquid crystal display device according to a prior art.

### DETAILED DESCRIPTION OF THE PREFERRED EMBODIMENTS

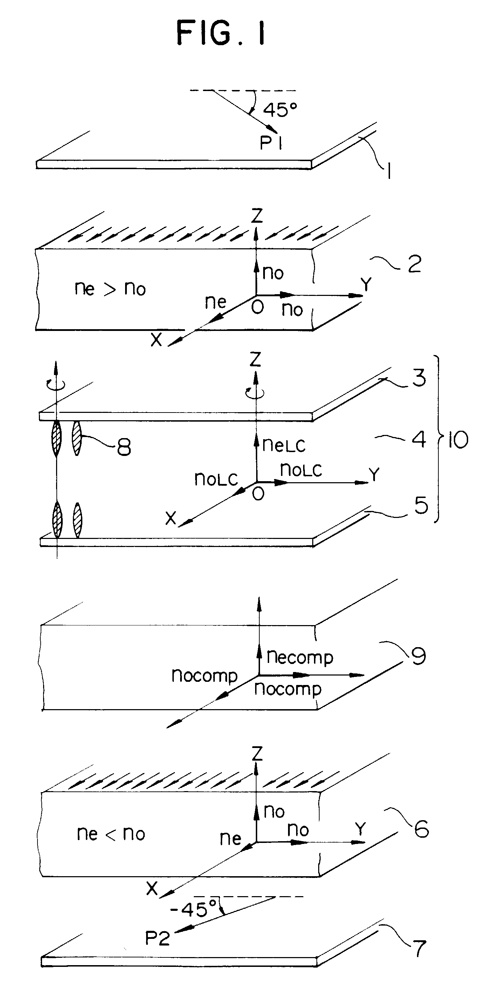

Fig.1 shows the structure of an embodiment of a liquid crystal display device according to the present invention. A homeotropic liquid crystal cell 10̸ contains a nematic liquid crystal layer 4 between a pair of substrates 3 and 5 such as glass plates. Molecules 8 of the nematic liquid crystal have a high refractive index in the direction of its major or principal axis. The liquid crystal molecules 8 are oriented substantially in the direction vertical to the substrates 3 and 5 under the condition that no electric field is applied.

In this condition, the liquid crystal layer 4 provides a high refractive index n_{eLC} in the direction vertical to the substrates 3 and 5, and a uniform low refractive index N_{oLC} in the in-plane direction. In other words, the liquid crystal layer 4 provides a positive optical activity.

An optical compensation plate 9 is mounted on one side of the liquid crystal cell 10̸. This optical compensation plate 9 has a uniaxial and negative optical anisotropy and a smaller refractive index in the z-axis direction perpendicular to the plane of this optical compensation plate 9. The negative optical anisotropy of the optical compensation plate 9 compensates the positive optical anisotropy of the liquid crystal layer 4. The optical compensation plate 9 may be made of ionomer available from Mitsui Du Pont Polychemical Corp. under the merchandise name "HI-MILAN", or polycarbonate.

On the outer sides of the liquid crystal cell 10̸ and optical compensation plate 9, there are disposed retardation plates 2 and 6. The retardation plate 2 is made of polycarbonate for example, and has a uniaxial optical anisotropy having a higher refractive index ne in one in-plane direction (x-axis direction) than in other directions. The retardation plate 6 is made of polystyrene for example, and has a uniaxial optical anisotropy having a lower refractive index no in the same in-plane direction (x-axis direction) than in other directions.

Therefore, the retardation plate 2 provides a positive optical activity with its optical axis being aligned in the x-axis direction, whereas the retardation plate 6 provides a negative optical activity with its optical axis being aligned in the same x-axis direction. The total effect of retardation by both the retardation plates 2 and 6 is canceled out. A pair of crossed polarizers 1 and 7 is provided on the outer sides of the retardation plates 2 and 6. The polarizing axes P1 and P2 of the polarizers 1 and 7 are aligned in the directions inclined by 45 degrees relative to the x- and y-axes.

For a pair of circular polarizers according to a prior art, retardation plates of the same optical characteristics are mounted in a crossed configuration. According to the present invention, retardation plates having the opposite optical characteristics are mounted with the optical axes of their uniaxial optical media being aligned in the same direction.

The thicknesses of the retardation plates 2 and 6 are preferably selected to such values providing a phase difference of a quarter wavelength λ/4. With the phase difference of the quarter wavelength λ/4, the linear polarizer 1 and retardation plate 2 constitute a dextrorotary circular polarizer and the linear polarizer 7 and retardation plate 6 constitute a levorotary circular polarizer.

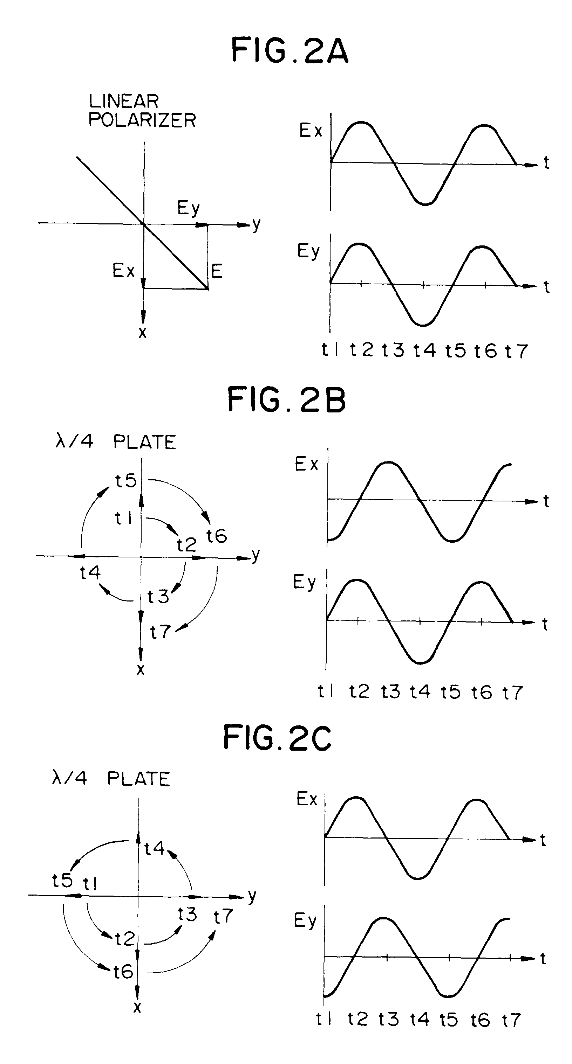

Figs.2A to 2C are schematic diagrams explaining the operation of the liquid crystal display device shown in Fig.1. Light incident to the polarizer 1 from the external is converted into linearly polarized light. The polarizing axis P1 of the polarizer 1 has an angle of 45 degrees relative to the x- and y-axes. The polarized light components in the x-and y-axis directions have the same phase and intensity as shown in Fig.2A.

As the thickness of the retardation plate having a larger refractive index in the x-axis direction is set to a value providing a phase difference of λ/4, the polarized light component in the x-axis direction having passed the retardation plate lags by a λ/4 from the polarized light component in the y-axis direction.

As the polarized light component in the x-axis direction lags in phase by a λ/4 from the polarized light component in the y-axis direction as shown in Fig.2B on the right side, the combined polarized light becomes circularly polarized light rotating in the clockwise direction in the inplane of the retardation plate as shown in Fig.2B on the left side.

For the retardation plate having a lower refractive index in the x-axis direction, the polarized light component in the x-axis direction advances in phase by a λ/4 from the polarized light component in the y-axis, as opposed to the case of Fig.2B. These polarized light components Ex and Ey are shown in Fig.2C on the right side. The combined polarized light rotates in the counter-clockwise in the in-plane of the retardation plate as shown in Fig.2C on the left side.

The retardation plate 2 having the positive optical activity is made of, e.g., a polycarbonate film pulled or drawn in one direction in plane of the sheet. The thickness of the polycarbonate film is set to a value providing a phase difference of λ/4, for example a thickness of about 2.5 µm.

The retardation plate 6 having the negative optical activity is made of, e.g., a polymethyl methacrylate (PMMA) film drawn in one direction. The thickness of the retardation plate 6 is also set to a value providing a phase difference of λ/4 for example a thickness of about 2.5 µm. The dispersion of a refractive index of these films is 5% or less over the visible light range from 440̸ nm to 70̸0̸ nm.

A parasitic transmission factor T given by the dispersion of a transmission factor is expressed by T < sin²(0̸.0̸125 π) or T < 0̸.2% which hardly affects the operation of display devices of this kind.

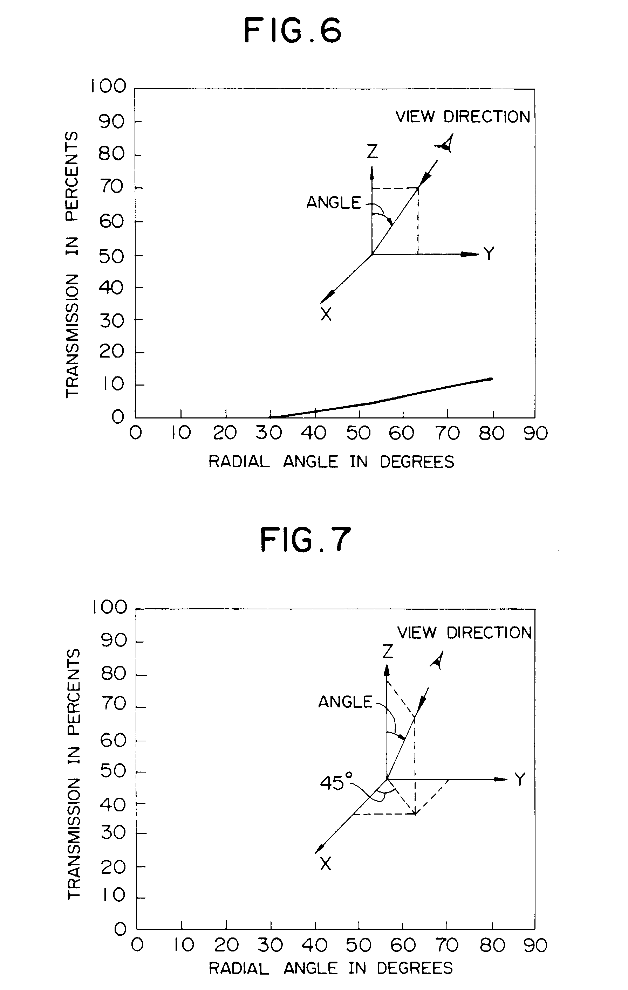

With the structure of the liquid crystal display device described above, it is possible to wide the field of view to about 50̸ 5 : degrees (contrast = 1) and raise the transmission factor by about 2.5% during an on-state, as shown in Figs.6 and 7.

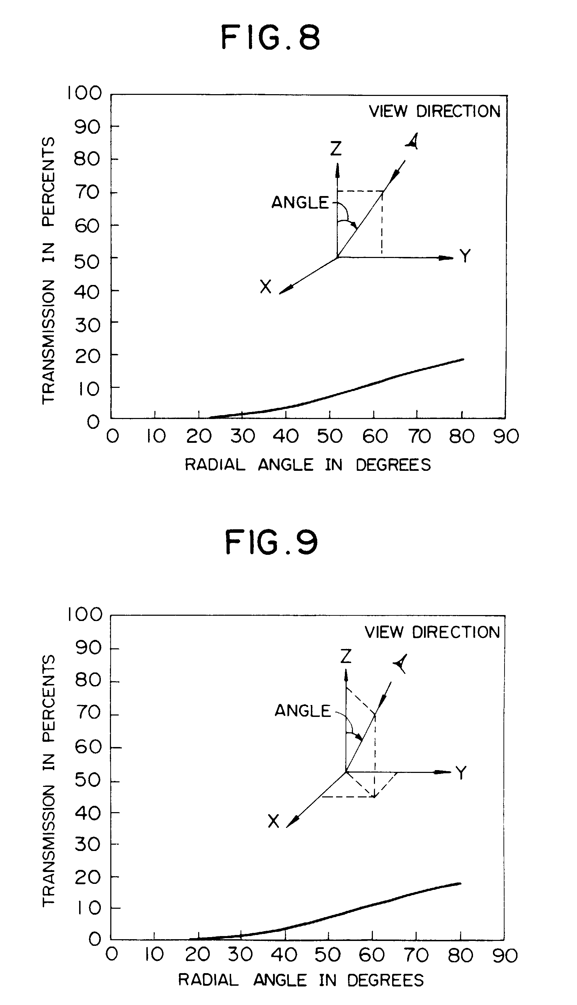

The graphs shown in Figs.6 and 7 show the simulated results of the transmission factor relative to a radial view angle for light having a wavelength of 0̸.55 µm. For a liquid crystal display device used for this simulation, the retardation plate 2 of the positive optical activity was set to nₑ = 1.555, nₒ = 1.5, and a film thickness d = 2.5 µm, the liquid crystal cell 10̸ having the positive optical activity was set to Δnd=[(n_{eLC} - n_{oLC}) ∗ thickness] = 1 µm, the optical compensation plate 9 was set to Δnd=[(n_{eLC} - n_{oLC}) ∗ thickness] = - 0̸.8 µm, and the retardation plate 6 having the negative optical activity was set to nₑ = 1.5, nₒ = 1.555, and a film thickness d = 2.5 µm. For the comparison sake, the simulated results for another liquid crystal display device are shown in Figs.8 and 9, this device having retardation plates 2 and 6 whose optical axes are set perpendicular to each other, with the settings of nₑ = 1.555, nₒ = 1.5, and a film thickness = 2.5 µm.

The present invention has been described in connection with the preferred embodiments. The present invention is not intended to be limited only to the above-described embodiments, but it is obvious that various changes, improvements, combinations and the like are possible within the scope of the appended claims for those skilled in the art.

## Claims

1. A homeotropic liquid crystal display device comprising:
a liquid crystal cell (10̸) having a pair of substrates (3, 5) and a nematic liquid crystal layer (4) sandwiched therebetween and including molecules (8) oriented substantially vertical to the substrates under no application of electric field between said pair of substrates, said liquid crystal layer having a positive optical activity with an optical axis aligned vertical to the substrates;
a first retardation plate (2) mounted on one side of said liquid crystal cell for providing a phase difference of substantially a quarter wavelength, said first retardation plate having a positive optical activity with an optical axis aligned in one in-plane direction parallel with the substrates;
a first polarizer (1) mounted on the outer side of said first retardation plate and having a polarizing axis in an in-plane direction parallel with the substrates, said in-plane direction being inclined by about 45 degrees relative to the optical axis of said first retardation plate;
a second retardation plate (6) mounted on the other side of said liquid crystal cell for providing a phase difference of substantially a quarter wavelength, said second retardation plate having a negative optical activity with an optical axis aligned in parallel with said optical axis of said first retardation plate, said positive and negative optical activities being opposite in sign;
a second polarizer (7) mounted on the outer side of said second retardation plate and having a polarizing axis in an in-plane direction parallel with the substrates, and substantially perpendicular to the polarizing axis of said first polarizer; and
an optical compensation plate (9) having a uniaxial negative optical anisotropy with an optical axis being aligned in a direction vertical to the substrates for compensating the optical anisotropy of the nematic liquid crystal layer.

2. A homeotropic liquid crystal display device according to claim 1, wherein said first retardation plate (2) is made of a polycarbonate film pulled in one in-plane direction, and said second retardation plate (6) is made of a polymethyl methacrylate film pulled in one in-plane direction.

## Patentansprüche

1. Eine homöotropische Flüssigkristallanzeigevorrichtung, die folgendes aufweist:
eine Flüssigkristallzelle (10) mit einem Paar von Substraten (3, 5) und einer nematischen Flüssigkristallschicht (4) sandwichartig dazwischen und einschließlich Molekülen (8), die im wesentlichen vertikal zu den Substraten orientiert sind, wenn kein elektrisches Feld zwischen dem erwähnten Paar von Substraten angelegt ist, wobei die Flüssigkristallschicht eine positive optische Aktivität mit einer optischen Achse, ausgerichtet vertikal zu den Substraten besitzt;
eine erste Verzögerungsplatte (2), angebracht auf einer Seite der Flüssigkristallzelle zur Erzeugung einer Phasendifferenz von im wesentlichen einer Viertel Wellenlänge, wobei die erste Verzögerungsplatte eine positive optische Aktivität besitzt, und zwar mit einer optischen Achse, ausgerichtet in einer In-Ebene-Richtung parellel zu den Substraten; einen ersten Polarisierer (1), angebracht auf der Außenseite der erwähnten ersten Verzögerungsplatte und mit einer Polarisationsachse in einer In-Ebene-Richtung parallel mit den Substraten, wobei die In-Ebene-Richtung um 45° bezüglich der optischen Achse der ersten Verzögerungsplatte geneigt ist;
eine zweite Verzögerungsplatte (6), angebracht an der anderen Seite der Flüssigkristallzelle zur Erzeugung einer Phasendifferenz im wesentlichen einer Viertel Wellenlänge, wobei die zweite Verzögerungsplatte eine negative optische Aktivität mit einer optischen Achse, ausgerichtet parallel mit der erwähnten optischen Achse der ersten Verzögerungsplatte aufweist, und wobei die positiven und negativen optischen Aktivitäten entgegengesetztes Vorzeichen besitzen;
einen zweiten Polarisierer (7), angebracht auf der Außenseite der erwähnten zweiten Verzögerungsplatte und mit einer Polarisationsachse in einer In-Ebene-Richtung parallel mit den Substraten, und zwar im wesentlichen senkrecht zu der Polarisationsachse des ersten Polarisierers; und
eine optische Kompensationsplatte (9) mit einer uniaxialen negativen optischen Anisoptropie mit einer optischen Achse, ausgerichtet in einer Richtung vertikal zu den Substraten zum Kompensieren der optischen Anisotropie der nematischen Flüssigkristallschicht.

2. Homöotropische Flüssigkristallanzeigevorrichtung gemäß Anspruch 1, wobei die erste Verzögerungsplatte (2) aus einer Polycarbonatschicht oder einem -film besteht, und zwar gezogen in einer In-Ebene-Richtung, und wobei die zweite Verzögerungsplatte (6) aus einem Polymethylmethacrylatfilm oder einer - schicht, gezogen in einer In-Ebene-Richtung, hergestellt ist.

## Revendications

1. Dispositif d'affichage à cristaux liquides comprenant :
une cellule à cristaux liquides (10) comportant une paire de substrats (3,5) et une couche de cristaux liquides nématiques (4) prise en sandwich entre ces substrats et contenant des molécules (8) orientées sensiblement orthogonalement aux substrats en l'absence d'application d'un champ électrique entre la paire de substrats, la couche de cristaux liquides ayant une activité optique positive d'axe optique orthogonal aux substrats ;
une première lame à retard (2) montée d'un côté de la cellule à cristaux liquides pour fournir une différence de phase sensiblement d'un quart de longueur d'onde, la première lame à retard ayant une activité optique positive d'axe optique dans une direction parallèle au plan des substrats ;
un premier polariseur (1) monté sur la face externe de la première lame à retard ayant un axe de polarisation dans un plan parallèle aux substrats, la direction dans le plan étant inclinée d'environ 45 degrés par rapport à l'axe optique de la première lame à retard ;
une seconde lame à retard (6) montée de l'autre côté de la cellule à cristaux liquides pour fournir une différence de phase sensiblement d'un quart de longueur d'ondes, la seconde lame à retard ayant une activité optique négative et un axe optique parallèle à l'axe optique de la première lame à retard, les activités optiques positive et négative étant de sens opposés ;
un second polariseur (7) monté sur la face externe de la seconde lame à retard et ayant un axe de polarisation dans un plan parallèle aux substrats et sensiblement perpendiculaire à l'axe de polarisation du premier polariseur ; et
une lame de compensation optique (9), ayant une anisotropie optique uniaxe négative d'axe optique aligné dans une direction orthogonale aux substrats pour compenser l'anisotropie optique de la couche de cristaux liquides nématiques.

2. Dispositif d'affichage à cristaux liquides homéotropes selon la revendication 1, dans lequel la première lame à retard (2) est constituée d'un film de polycarbonate étiré dans une direction dans le plan, et la seconde lame à retard (6) est constituée d'un film de méthacrylate de polyméthyle étiré dans une direction dans le plan.
